# EUROPÄISCHE PATENTSCHRIFT

(11) **EP 1 457 062 B1**
(45) Veröffentlichungstag und Bekanntmachung des Hinweises auf die Patenterteilung: **23.03.2005**
(21) Anmeldenummer: 02795013.8
(22) Anmeldetag: 17.12.2002
(51) Int. Cl.: H04Q 3/00

(54) **VERFAHREN ZUR BEREITSTELLUNG VON PSTN/ISDN DIENSTEN IN NETZWERKEN DER NÄCHSTEN GENERATION**
METHOD FOR PROVIDING PSTN/ISDN SERVICES IN NEXT GENERATION NETWORKS
PROCEDE DE FOURNITURE DE SERVICES RTPC / RNIS DANS DES RESEAUX DE LA PROCHAINE GENERATION

(30) Priorität: 17.12.2001 DE 10161878
(43) Veröffentlichungstag der Anmeldung: 15.09.2004
(73) Patentinhaber: Siemens Aktiengesellschaft, 80333 München (DE); Ruckstuhl, Hanspeter, 82515 Wolfratshausen (DE)
(72) Erfinder: RUCKSTUHL, Hanspeter, 82515 Wolfratshausen (DE)
(86) Internationale Anmeldenummer: PCT/DE2002/004619
(87) Internationale Veröffentlichungsnummer: WO 2003/053074

(56) Entgegenhaltungen:
- WO-A-01/59999

## Beschreibung

In den heutigen Sprachtelefonienetzen (PSTN/ISDN = Public Switched Telephone Network/Integrated Services Digital Network), welche auf dem Prinzip der Leitungsvermittlung (TDM = Time Division Multiplex) basieren, übernehmen die Orts- und Transitvermittlungsstellen sowohl die Verbindungssteuerung als auch die Nutzkanalsteuerung (z.B. Zweierverbindung, Dreierverbindung, Einspeisen von Tönen).

Netzwerke der nächsten Generation (z.B. ATM = Asynchronous Transfer Mode, IP = Internet Protocol), welche für Sprache und Daten konzipiert sind, arbeiten nach dem Prinzip der Separierung von Verbindungs- und Nutzkanalsteuerung. In Netzen der nächsten Generation - Next Generation Networks, NGN - werden also, anders als im PSTN/ISDN, unterschiedliche Netzelemente zur Verbindungssteuerung und zur Nutzkanalsteuerung verwendet. Die Verbindungssteuerung übernehmen dabei sogenannte SoftSwitches, welche mittels eines geeigneten MediaGatewayControl-Protokolls mit den sogenannten MediaGateways, welche den Nutzkanal steuern, kommunizieren. Die SoftSwitches im NGN kommunizieren untereinander über ein geeignetes Signalisierungsprotokoll, z.B. BICC = Bearer Independent Call Control analog zu den Vermittlungsstellen des PSTN/ISDN, wo z.B. das Zeichengabesystem Nr. 7 (CCS7) eingesetzt wird.

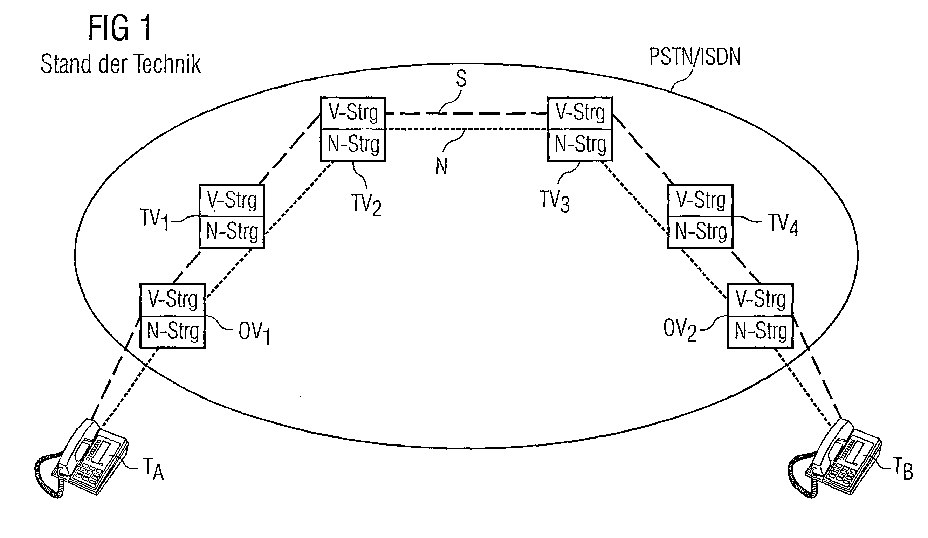

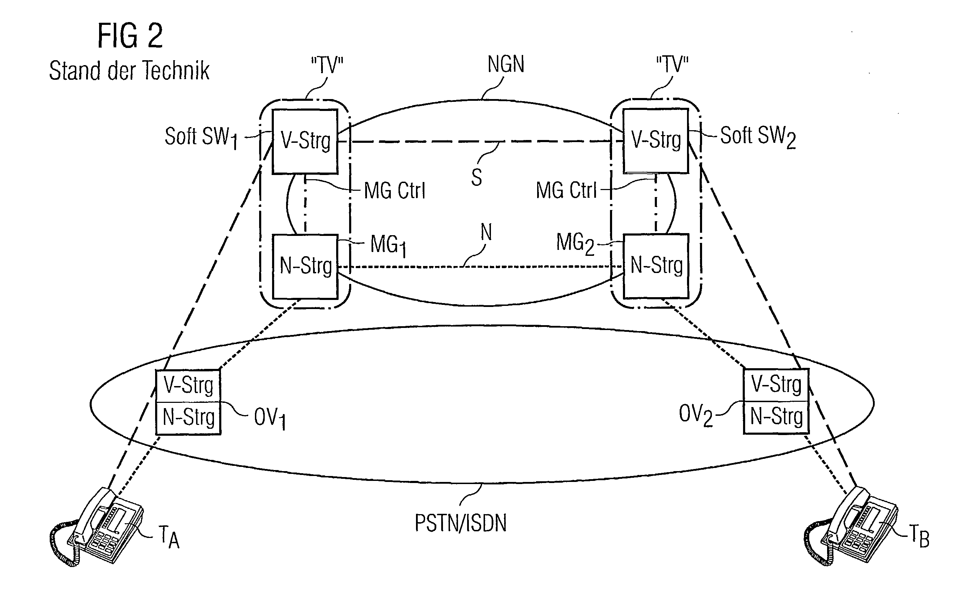

Figur 1 zeigt das Prinzip der heutigen PSTN/ISDN Netze, während Abbildung 2 das Prinzip der Sprachkommunikation in Netzen der nächsten Generation NGN darstellt.

Eine beispielhafte Struktur eines Netzwerks der nächsten Generation ist aus der Veröffentlichungsschrift WO 01/59999 bekannt. Die WO 01/59999 offenbart ein Kommunikationsnetzwerk der nächsten Generation mit'Service Generation Switches bzw.

Diensterzeugungsknoten, die mittels eines Steuerprotokolls Media Gateways des Netzwerkes der nächsten Generation ansteuern, wobei die Media Gateways Hardware eines herkömmlichen öffentlichen Telefonnetzwerkes (PSTN/ISDN) ersetzen. Ferner beschreibt die WO 01/59999 ein Verfahren zur Steuerung von Diensten bzw. Services in einem solchen Netzwerk.

Im heutigen PSTN/ISDN sind eine Vielzahl von Teilnehmer- und Netzdiensten implementiert, welche von Endkunden und Netzbetreibern, unabhängig von der technischen Realisierung, weiterhin benötigt werden. Die Realisierung dieser Dienste betrifft in der Regel Verbindungs- sowie Nutzkanalsteuerung.

Der Funktionssplit in NGN, d.h. die Aufteilung von Verbindungssteuerung VStrg und Nutzkanalsteuerung NStrg verhindert den Einsatz der Steuerungssoftware heutiger Vermittlungsstellen in NGN. Die SoftSwitches SoftSW, die in den NGN die Verbindungssteuerung VStrg übernehmen, sollen vorzugsweise durch Standardrechner gebildet werden und so die hochspezialisierten Vermittlungsrechner ersetzen.

Dabei tritt das Problem auf, daß die Neuentwicklung bzw. Portierung der Steuerungssoftware für PSTN/ISDN-Dienste für Standardrechner äußerst aufwendig und sehr komplex ist. Ferner muß ein SoftSwitch mit klassischen Transitvermittlungsstellen interoperabel sein, also die entsprechenden klassischen Signalisierungsprotokolle und Prozeduren beherrschen, weil das heutige PSTN/ISDN und die Netze der nächsten Generation für längere Zeit koexistieren werden.

Dieses Problem ergibt sich neu als Folge der Verwendung der Netze der nächsten Generation für Bereitstellung der klassischen Telefoniedienste (Nachbildung des PSTN/ISDN). Bisher bekannte Lösungsvorschläge sind:
- Neuentwicklung der Steuerungssoftware auf kommerziellen Plattformen
- Spezifische Weiterentwicklung klassischer Vermittlungsstellen

Es ist daher eine Aufgabe der Erfindung, ein Verfahren anzugeben, mit dem die Steuersoftware klassischer Orts- und Transitvermittlungsstellen für die Verbindungssteuerung in Netzen der nächsten Generation mit möglichst geringem Aufwand - d.h. praktisch unverändert - wiederverwendet werden kann. Die besondere Problemstellung ist dabei die Berücksichtigung der neuen Funktionsverteilung, d.h. die Steuerung abgesetzter MediaGateways durch das Media Gateway Control Protocol MGCP.

Diese Aufgabe wird durch ein Verfahren zur Steuerung von Telefoniediensten in Kommunikationsnetzwerken der nächsten Generation gemäß der Merkmale des Patentanspruchs 1 und einen Vermittlungsknoten (SoftSW) eines Kommunikationsnetzwerkes gemäß der Merkmale des Patentanspruchs 8 gelöst. Bevorzugte Ausführungsformen sind den abhängigen Ansprüchen entnehmbar.

Erfindungsgemäß wird ein Verfahren zur Steuerung von Telefoniediensten in Kommunikationsnetzwerken der nächsten Generation NGN vorgesehen, demgemäß ein Software-Modell S/W-Mod die in den Netzwerken der nächsten Generation NGN ersetzte klassische, auf den Nutzkanal N bezogene Hardware K, KU, TG/AG, D eines herkömmlichen öffentlichen Telefonnetzwerkes PSTN/ISDN nachbildet, wobei das Software-Modell S/W-Mod so ausgestaltet ist, daß eine im herkömmlichen Telefonnetzwerk eingesetzte Steuerungssoftware V-StrgS/W eines Vermittlungsknotens OV, TV in Zusammenhang mit einem SoftSwitch SoftSW mittels eines Steuerungsprotokolls MGCtrl die Komponenten KS, AS, MG des Netzwerkes der nächsten Generation NGN ansteuert, welche die klassische, auf den Nutzkanal N bezogene Hardware K, KU, TG/AG, D ersetzen.

Vorteilhaft kann vorgesehen sein, daß das Software-Modell S/W-Mod der Steuerungssoftware erste Schnittstellen I in Richtung Steuerungssoftware V-StrgS/W nachbildet, welche den Schnittstellen I₁, I₂, I₃, I₄ der ersetzten klassischen Hardware K, KU, TG/AG, D entsprechen.

Ferner kann das Software-Modell (S/W-Mod) konfigurierbar ausgestaltet sein, daß zur Kommunikation mit den Komponenten (KS, AS, MG) des Netzwerkes der nächsten Generation (NGN) und zur Steuerung der Nutzkanäle (N) notwendige Adressierungsinformation abgeleitet werden.

Eine Umsetzung der auf die klassische Hardware bezogenen Adressen der Nutzkanäle N in auf die Komponenten des Netzwerkes der nächsten Generation NGN bezogene Adressen der Nutzkanäle kann mittels einer Tabelle erfolgen.

Vorteilhaft kann vorgesehen werden, daß das Software-Modell S/W-Mod dergestalt konfigurierbar ist, daß unterschiedliche Steuerprotokolle MGCtrl zur Steuerung der Komponenten des Netzwerkes der nächsten Generation NGN ohne Rückwirkungen auf die Steuerungssoftware bedient werden.

Spezifische, zur Steuerung der Komponenten des Netzwerkes der nächsten Generation (NGN) notwendige Nutzkanalbeschreibungsdaten können innerhalb des Softswitches und zwischen weiteren SoftSwitches durch die Einführung eines Signalling Gateway Agents (SG-A) mittels einer zweiten Schnittstelle (U) bezüglich der Steuerungssoftware rückwirkungsfrei (V-StrgS/W) ausgetauscht werden.

Klassische Signalisierungsprotokolle können mittels Signalling Gateway Agents (SG-A) und der zweiten Schnittstelle (U) mittels des Software-Modells (S/W-Mod) einem für Netzwerke der nächsten Generation spezifischen Protokollstack zugeführt und in ein für Netzwerke der nächsten Generation spezifisches Signalisierungsprotokoll konvertiert werden.

Erfindungsgemäß wird ferner ein Vermittlungsknoten (SoftSW) eines Kommunikationsnetzwerkes der nächsten Generation (NGN) vorgesehen, der Mittel (S/W-Mod) zum Nachbilden ersetzter klassischer, auf den Nutzkanal (N) bezogener Hardware (K, KU, TG/AG, D) eines herkömmlichen öffentlichen Telefonnetzwerkes (PSTN/ISDN) aufweist, die so ausgestaltet sind, daß eine im herkömmlichen Telefonnetzwerk eingesetzte Steuerungssoftware (V-StrgS/W) eines Vermittlungsknotens (OV, TV) in Zusammenhang mit dem Vermittlungsknoten (SoftSW) mittels eines Steuerungsprotokolls (MGCtrl) die Komponenten (KS, AS, MG) des Netzwerkes der nächsten Generation NGN ansteuert, welche die klassische, auf den Nutzkanal (N) bezogene Hardware (K, KU, TG/AG, D) ersetzen.

Der Vermittlungsknoten kann zusätzlich Mittel zum Nachbilden erster Schnittstellen (I) in Richtung Steuerungssoftware (V-StrgS/W) aufweisen, wobei die Schnittstellen (I) den Schnittstellen (I₁, I₂, I₃, I₄) der ersetzten klassischen Hardware (K, KU, TG/AG, D) entsprechen.

Für den Vermittlungsknoten können außerdem Mittel zum Ermitteln von Adressierungsinformation der Komponenten (KS, AS, MG) des Netzwerkes der nächsten Generation NGN und zum Ermitteln von Adressierungsinformation zur Steuerung der Nutzkanäle (N) vorgesehen werden. sowie ein oder mehrere Signalling Gateway Agents (SG-A) zum bezüglich der Steuerungssoftware (V-StrgS/W) rückwirkungsfreien Austauschen der für die Steuerung der Komponenten des Netzwerkes der nächsten Generation notwendigen Nutzkanalbeschreibungsdaten innerhalb des Vermittlungsknotens und zwischen weiteren Vermittlungsknoten mittels einer zweiten Schnittstelle (U).

In einer besonderen Ausgestaltung kann der Signalling Gateway Agent (SG-A) zusätzlich Konvertierungsmittel zum Konvertieren klassischer Signalisierungsprotokolle in ein für Netzwerke der nächsten Generation spezifisches Signalisierungsprotokoll aufweisen.

Die Erfindung weist folgende Vorteile auf:
- Über eine Software-Modellierung der vermittlungsstellenspezifischen Hardware wird die Steuerungssoftware klassischer Vermittlungsstellen für SoftSwitches nutzbar gemacht.
- Alle bekannten PSTN/ISDN Features können in Netzwerken der nächsten Generation NGN unmittelbar bereitgestellt werden, ohne daß eine Neuerstellung entsprechender, an die neuen Plattformen angepaßter Steuerungssoftware erforderlich.
- Die ursprünglich für das PSTN/ISDN eingeführten Backendsysteme (OA&M = Operation, Administration & Maintenance, Billing, Verkehrsmessen) können im NGN weiterverwendet werden.
- Die ursprünglich vermittlungsstellenspezifische Steuerungssoftware wird auf beliebige Plattformen portierbar.
- Die Steuerungssoftware muß nicht angepaßt werden, wenn sich MediaGateways, die Netztechnologie oder die MediaGatewayControlProtokolle ändern

Im folgenden wird ein Ausführungsbeispiel der Erfindung im Zusammenhang mit 7 Figuren näher erläutert.
Figur 1 zeigt schematisch die Grundstruktur eines PSTN.
Figur 2 zeigt schematisch ein mögliches Beispiel einer NGN-Architektur, hier noch unter Einbeziehung von Bestandteilen des PSTN.
Figur 3 zeigt schematisch die Komponenten einer Ortsvermittlungsstelle des PSTN.

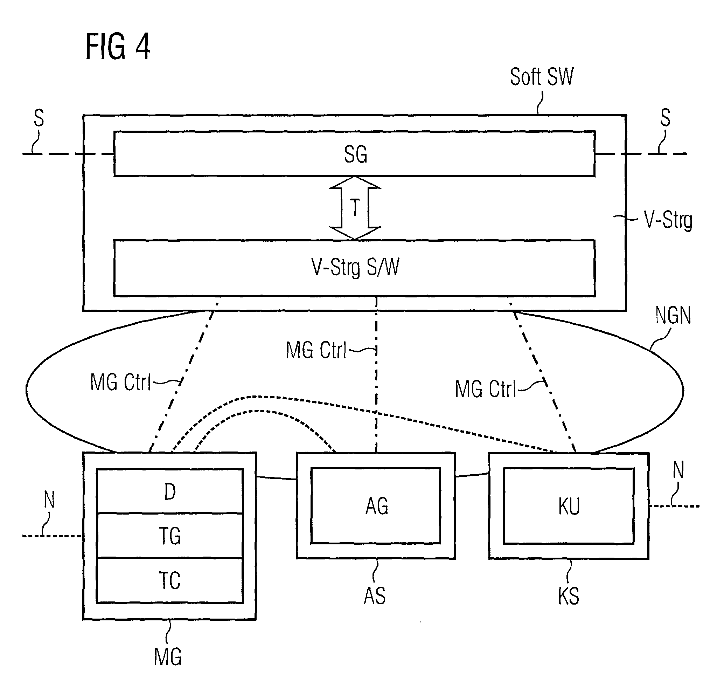

Figur 4 zeigt schematisch eine funktionale Gruppe eines NGN, die die Aufgaben der Ortsvermittlungsstelle aus Figur 3 übernimmt.
Figur 5 zeigt schematisch einen SoftSwitch des NGN, der ein erfindungsgemäßes Softwaremodell der Nutzkanalhardware der Ortsvermittlungsstelle aus Figur 3 aufweist.
Figur 6 zeigt den SoftSwitch aus Figur 5 mit weiteren Details
Figur 7 zeigt ein Ablaufdiagramm eines beispielhaften Verbindungsaufbaus unter Verwendung des erfindungsgemäßen Softwaremodells der Nutzkanalhardware.

In Figur 1 ist, wie bereits erwähnt, das Prinzip von Sprachtelefonienetzen PSTN/ISDN (im folgenden: PSTN) gemäß des Standes der Technik abgebildet. Beispielhaft besteht das PSTN aus Ortsvermittlungsstellen OV₁, OV₂ und Transitvermittlungsstellen TV_{1..4}. Dabei dienen die Ortsvermittlungsstellen in der Regel dem Anschluß von Teilnehmern oder privaten Nebenstellennetzwerken.

In Figur 1 ist ein erstes Teilnehmerendgerät T_{A} mit der ersten Ortsvermittlungsstelle OV₁ verbunden, und ein zweites Teilnehmerendgerät T_{B} ist mit der zweiten Ortsvermittlungsstelle OV₂ verbunden. Die Teilnehmerendgeräte können dabei beispielsweise analoge oder digitale Telefone sein. In Figur 1 sind ISDN-Telefone dargestellt, bei denen Signalisierungsinformation und Nutzinformation bereits auf gesonderten Kanälen zur Ortsvermittlungsstelle übertragen werden. Genauer dient der sogenannte D-Kanal zur Übertragung der Signalisierungsinformation und weist üblicherweise eine Übertragungsrate von 16kbit/s auf. Zur Sprachübertragung stehen regelmäßig zwei sogenannte B-Kanäle mit einer Bandbreite von je 64kbit/s zur Verfügung.

Die Art der Endgeräte ist jedoch für das Arbeitsprinzip des PSTN unerheblich, das spätestens beginnend mit der Ortsvermittlungsstelle OV Nutzinformation und Signalisierungsinformation über gesonderte Kanäle übermittelt: Nutzkanäle N und Signalisierungskanäle S. Folglich weisen alle Vermittlungsstellen Elemente zur Nutzkanalsteuerung N-Strg und Elemente zur Verbindungssteuerung V-Strg auf, wobei die Nutzkanalsteuerungen N-Strg der Vermittlungsstellen OV, TV die Steuerung der Nutzkanäle N vorsehen und die Verbindungssteuerungen V-Strg der Vermittlungsstellen OV, TV die Steuerung der Signalisierungskanäle S vorsehen.

Wie bereits erwähnt, ist die Netztopologie lediglich beispielhaft stark vereinfacht dargestellt. Tatsächliche PSTN-Topologien sehen ferner z.B. sogenannte Signaling Transfer Points STP vor, die keine Nutzkanalsteuerung N-Strg aufweisen. Zur Signalisierung kommt üblicherweise eine Variante des Common Channel Signaling System No. 7 CCS7 zum Einsatz. Ferner ist die Darstellung aus Figur 1 auch insofern vereinfacht, daß die erste Ortsvermittlungsstelle OV₁ mit einer ersten Transitvermittlungsstelle TV₁ verbunden ist, diese wiederum mit einer zweiten Transitvermittlungsstelle TV₂, diese mit einer dritten Transitvermittlungsstelle TV₃, welche wiederum mit einer vierten Transitvermittlungsstelle TV₄ verbunden ist, wobei die vierte Transitvermittlungsstelle TV₄ schließlich mit der zweiten Ortsvermittlungsstelle OV₂ verbunden ist. In realen PSTN sind zur Verringerung der Ausfallhäufigkeit in vielen Fällen Querverbindungen vorgesehen, beispielsweise zwischen der ersten und der vierten Transitvermittlungsstelle.

In Figur 2 ist eine beispielhafte Konfiguration eines Netzwerkes der nächsten Generation (im folgenden: NGN für Next Generation Network) dargestellt. Im NGN werden Verbindungssteuerung V-Strg und Nutzkanalsteuerung N-Strg separiert, d.h. in getrennten Komponenten realisiert. Beispielhaft wurden zwei Transitvermittlungsstellen TV als durch Komponenten des NGN ersetzt dargestellt. Der Signalisierungskanal S ist dabei jeweils mit der verbindungssteuernden Komponente, hier ein SoftSwitch SW, verbunden, wohingegen der Nutzkanal N mit der nutzkanalsteuernden Komponente, hier ein MediaGateway MG, verbunden ist. Ein SoftSwitch ist dabei mittels einer Steuerverbindung MGCtrl mit den zugeordneten Komponenten, d.h. z.B. ein oder mehrere MediaGateways, verbunden.

Im Fall aus Figur 2 wurde eine PSTN/NGN Interworking-Situation dargestellt, bei der die Teilnehmerendgeräte T_{A}, T_{B} wie in Figur 1 mit PSTN-Ortsvermittlungsstellen OV₁, OV₂ verbunden sind. Das Transitnetzwerk in Figur 2 wird im Unterschied zu Figur 1 durch ein NGN gebildet, welches beispielhaft aus zwei Softswitches SoftSW₁, SoftSW₂ und zwei MediaGateways MG₁, MG₂ besteht. Andere Topologien umfassen den Fall, in dem eines der Teilnehmerendgeräte bereits direkt mit dem NGN verbunden ist, oder den Fall, in dem bereits beide Teilnehmerendgeräte direkt mit dem NGN verbunden sind - nicht dargestellt.

Die Vermittlungsstellen OV₁, OV₂, TV_{1..4} des PSTN bestehen aus einem Software-Komplex V-StrgS/W zur Verbindungssteuerung V-Strg und einem Hardware-Komplex zur Nutzkanalsteuerung N-Strg. Die Hardware zur Nutzkanalsteuerung N-Strg muß mindestens folgende Aufgaben beherrschen:
- Verbindungsdurchschaltung zwischen Eingangs- und Ausgangsport
- Konferenzschaltung mehrerer Eingangs- und Ausgangsports
- Einspeisen von Tönen und/oder Ansagen
- Erkennen von Tönen und/oder Sprache

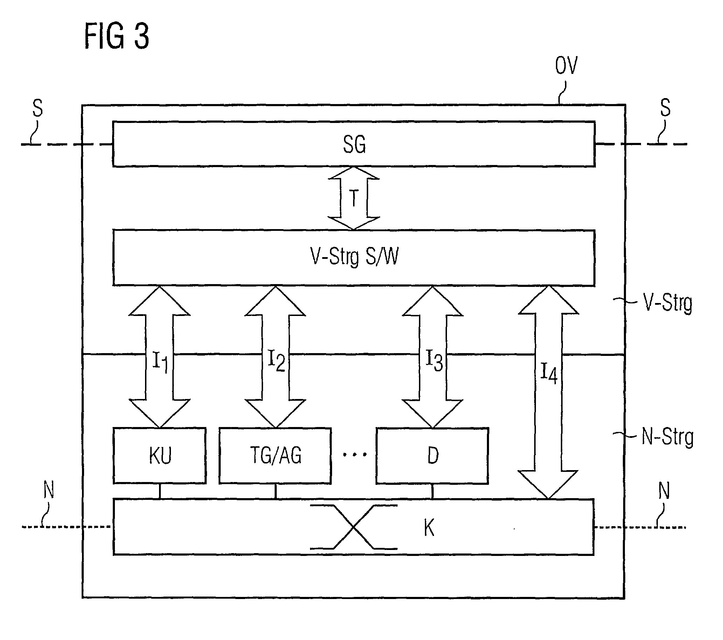

Eine Vermittlungsstelle OV des PSTN ist schematisch in Figur 3 dargestellt. Die genannten Aufgaben sind wie folgt verschiedenen Hardware-Baugruppen zugeordnet:
- Verbindungsdurchschaltung: Koppelnetz K
- Konferenzschaltung: Konferenzunit KU in Verbindung mit Koppelnetz K
- Einspeisen von Tönen/Ansagen: Tongenerator TG und Ansagengenerator AG
- Erkennen von Tönen/Sprache: DTMF- und Sprachdetektor D

Dabei weist ein Vermittlungsrechner - nicht dargestellt, auf welchem die Software zur Verbindungssteuerung V-StrgS/W abläuft, mehrere Schnittstellen mit den genannten Komponenten auf:
- erste Schnittstelle I₁: Konferenzunit KU
- zweite Schnittstelle I₂: Tongenerator TG und Ansagengenerator AG
- dritte Schnittstelle I₃: DTMF- und Sprachdetektor D
- vierte Schnittstelle I₄: Koppelnetz K

Die Schnittstellen I_{1..4} stellen dabei die Verbindung zwischen Nutzkanalsteuerung N-Strg und Verbidungssteuerung V-Strg dar. Die Nutzkanäle N sind direkt oder mittels bestimmter Baugruppen - nicht dargstellt - mit dem Koppelnetz K verbunden, die Signalisierungskanäle mit einem Signaling Gateway SG, der über eine fünfte Schnittstelle T mit dem Vermittlungsrechner gekoppelt ist und somit mit der Verbindungssteuerungssoftware V_StrgS/W kommuniziert.

In Netzen der nächsten Generation werden die genannten Aufgaben von den MediaGateways übernommen werden, damit die Funktionalität des PSTN/ISDN nachgebildet wird. Analog zum PSTN/ISDN erfolgt auch im NGN die Featuresteuerung (Verbindungs- und Nutzkanalsteuerung) dezentral, d.h. die Aufgaben einer Vermittlungsstelle des PSTN/ISDN übernehmen ein SoftSwitch SoftSW und von ihm über ein MediaGatewayControlProtokoll MGCtrl gesteuerte Komponenten MG, AS, KS.

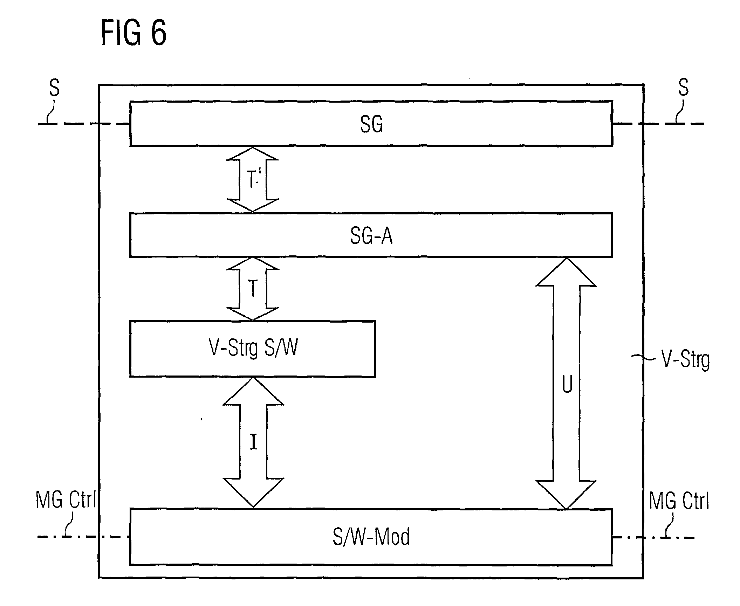

Dies ist in Figur 6 dargestellt. Die Verbindungssteuerung V-Strg wird wiederum durch einen Signaling Gateway SG übernommen, der mit der Verbindungssteuerungssoftware V-StrgS/W kommuniziert und gemeinsam mit dieser den SoftSwitch SoftSW bildet sowie mit den Signalisierungskanälen S verbunden ist. Die Nutzkanalsteuerung N-Strg wird in Figur 6 durch separate Komponenten gebildet, die vom SoftSwitch vermittels einer Media-GatewayControl MGCtrl gesteuert werden und mit den Nutzkanälen N verbunden sind. Diese Komponenten sind im einzelnen:
- Media Gateway MG, bestehend aus den funktionalen Elementen DTMF-Detektor D, Tongenerator TG und Transcoder TC
- Ansagenserver AS, bestehend aus dem funktionalen Element Ansagengenerator AG
- Konferenzserver KS, bestehend aus dem funktionalen Element Konferenzunit KU

Diese Komponenten stehen über das NGN in Kommunikation mit dem SoftSwitch sowie in direkter Kommunikation untereinander, dargestellt durch gestrichelte Linien. Als Steuerungsprotokoll auf den MediaGatewayControl-Verbindungen kann beispielsweise das Media Gateway Control Protocol MGCP eingesetzt werden.

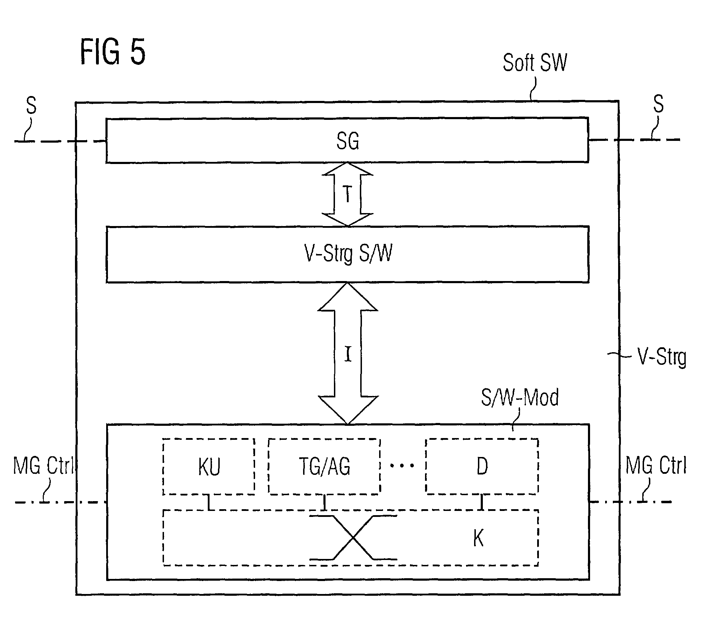

In Figuren 5 und 6 ist ein SoftSwitch SoftSW dargestellt, der erfindungsgemäß so erweitert wird, daß die Steuersoftware V-StrgS/W und Signaling Gateway Funktionalität SG klassischer Vermittlungsstellen des PSTN für die Verbindungssteuerung V-Strg in NGN eingesetzt werden kann.

Dazu wird ein Softwarekomplex bzw. ein Softwaremodell S/W-Mod der ursprünglichen Hardware der PSTN-Vermittlungsstelle eingeführt, der das Verhalten der nicht mehr benötigten nutzkanalbezogenen Hardware modelliert. Dieser Softwarekomplex S/W-Mod weist eine Schnittstelle I mit der Steuerungssoftware V-StrgS/W auf, welche analog bzw. identisch mit den ersetzten Schnittstellen I_{1..4} zur nicht mehr benötigten vermittlungsstellenspezifischen Hardware Konferenzunit KU, Ton/Ansagengenerator TG/AG, DTMF/Sprachdetektor D, Koppelnetz K aus Figur 3 ist. Das Softwaremodell S/W-Mod erzeugt setzt dabei die hardwarebezogenen Befehle und Adressen der Verbindungssteuerungssoftware V-StrgS/W in geeignete Anweisungen der Schnittstelle MGCtrl um, indem der Softwarekomplex S/W-Mod dergestalt konfigurierbar ist, daß die zur Kommunikation mit den MediaGateways MG bzw. der entsprechenden Nutzkanalsteuerung notwendige Adressierungsinformation(en), beispielsweise eine URL, aus der Hardware-Modellierung abgeleitet werden kann.

Die virtuellen, vermittlungsstellenspezifischen Nutzkanaladressen werden über eine Tabelle in die Nutzkanaladressen des Media Gateways MG umgesetzt und über das MediaGateway-ControlProtokoll ausgetauscht, z.B. Hardwareadresse/Equipment Number EQN <-> URL, welche den Nutzkanal im Media Gateway identifiziert.

Durch eine geeignete Strukturierung des Softwarekomplexes ist es leicht möglich, eine Konfigurierbarkeit des Softwarekomplexes hinsichtlich des verwendeten Steuerprotokolls MGCtrl für Media Gateways MG zu erreichen, so daß unterschiedlichste MediaGatewayControlProtokolle und damit unterschiedlichste MediaGateways, z.B. herstellerspezifisch, applikationsspezifisch ISDN/Trunking oder technologiespezifisch, z.B. ATM, IP, ohne Rückwirkungen auf die Steuersoftware, bedient werden können.

In Figur 6 wird ein Signaling Gateway Agent SG-A eingeführt, über den die spezifischen, zur Steuerung der diversen MediaGateways MG und Server AS, KS notwendigen, Nutzkanalbeschreibungsdaten innerhalb eines Softswitches SoftSW und zwischen mehreren SoftSwitches mittels einer Schnittstelle U ohne Rückwirkungen auf die Steuersoftware V-StrgS/W ausgetauscht werden können. Klassische Signalisierungsprotokolle können mittels des Signalling Gateway Agents SG-A und der Schnittstelle U über das Softwaremodell S/W-Mod geführt werden und vom Softwaremodell bedarfsweise einem NGN-spezfischen Protokollstack zugeführt und in ein NGN-spezifisches Signalisierungsprotokoll konvertiert werden, wodurch während einer Übergangsphase ermöglicht wird, daß klassische Komponenten des PSTN und Komponenten des NGN in einem Netz Vermittlungsaufgaben übernehmen.

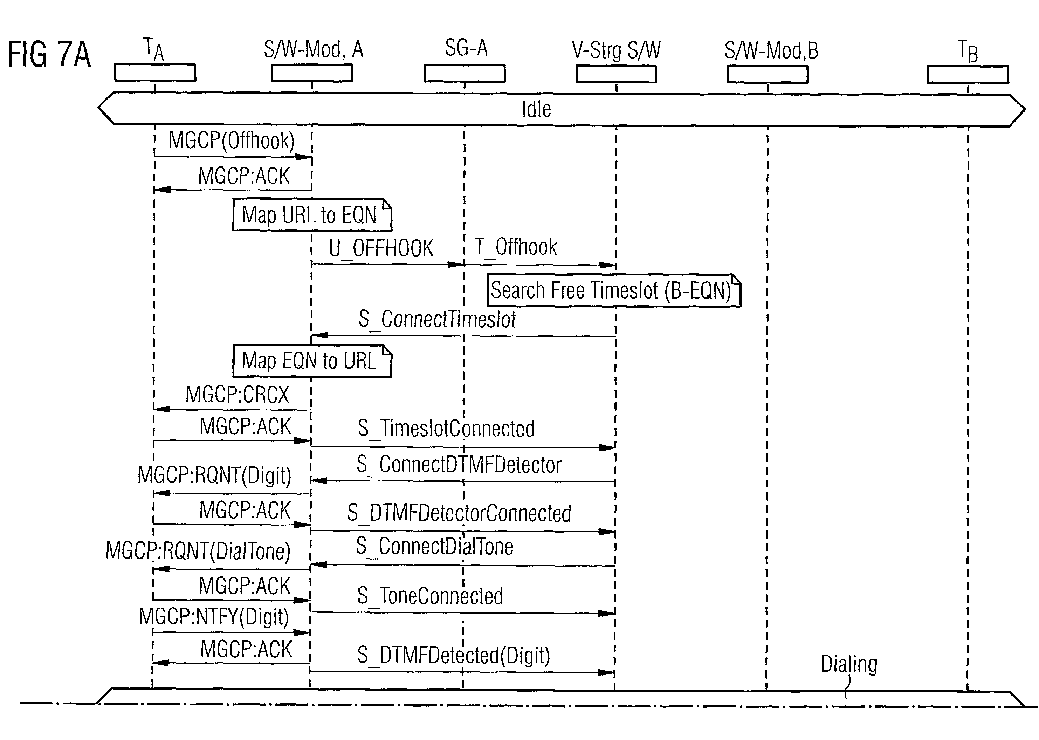

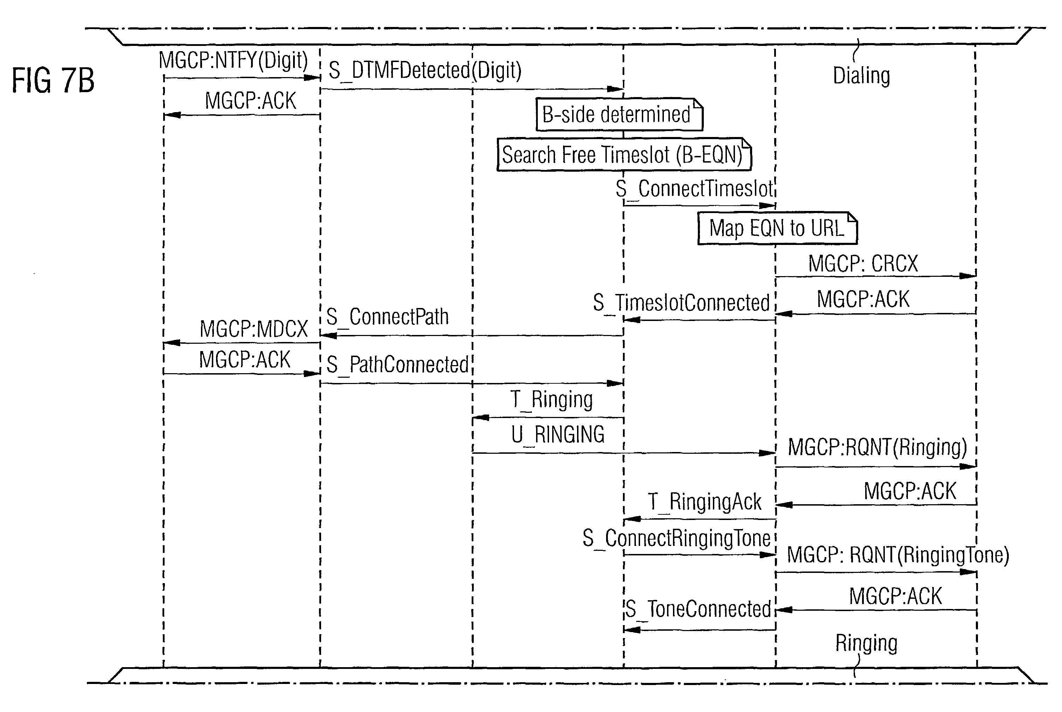

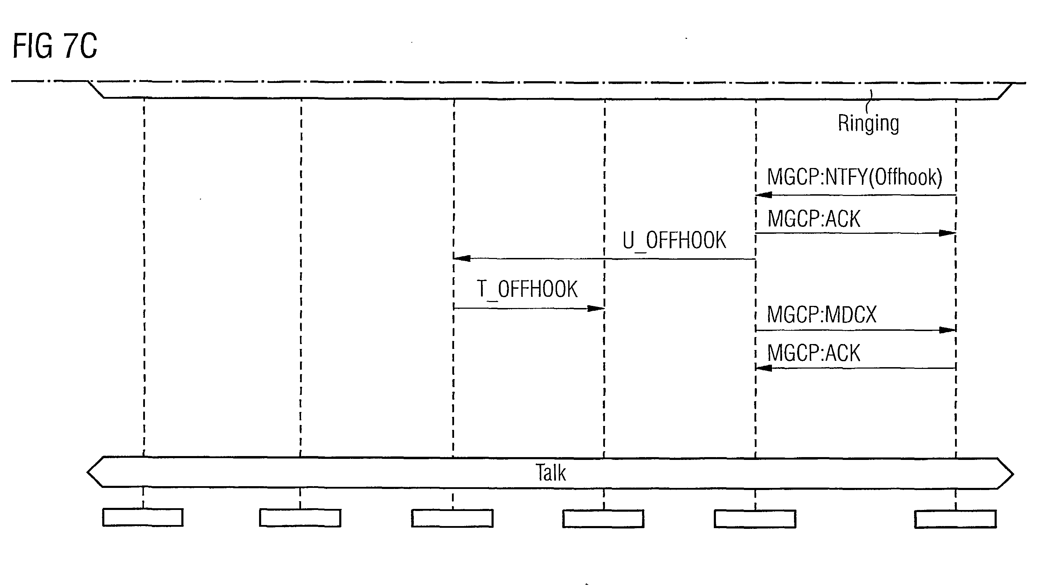

Figuren 7A-7C zeigen einen beispielhaften Meldungsablauf für einen Verbindungsaufbau unter Verwendung des Softwaremodells S/W-Mod. Es sei für diesen Meldungsablauf angenommen, daß die Teilnehmerendgeräte T_{A}, T_{B} im Gegensatz zu den Darstellungen der Figuren 1 und 2 um NGN-Endgeräte handelt, oder daß es sich um Media Gateways handelt.

## Patentansprüche

1. Verfahren zur Steuerung von Telefoniediensten in Kommunikationsnetzwerken der nächsten Generation (NGN), wobei die Kommunikationsnetzwerke der nächsten Generation zumindest einen SoftSwitch (SoftSW) aufweisen, der mittels eines Steuerprotokolls Komponenten (KS, AS, MG) des Netzwerkes der nächsten Generation (NGN) ansteuert, welche auf einen Nutzkanal (N) bezogene Hardware (K, KU, TG/AG, D) eines herkömmlichen öffentlichen Telefonnetzwerkes (PSTN/ISDN) ersetzen,
**dadurch gekennzeichnet,**
**daß** mit Hilfe eines Software-Modells (S/W-Mod) die in den Netzwerken der nächsten Generation (NGN) ersetzte klassische, auf den Nutzkanal (N) bezogene Hardware (K, KU, TG/AG, D) des herkömmlichen öffentlichen Telefonnetzwerkes (PSTN/ISDN) nachgebildet wird, wobei durch den SoftSwitch (SoftSW) die Komponenten (KS, AS, MG) des Netzwerkes der nächsten Generation (NGN) unter Einbeziehung einer im herkömmlichen Telefonnetzwerk eingesetzten Steuerungssoftware (V-StrgS/W) eines Vermittlungsknotens (OV, TV) angesteuert werden.

2. Verfahren nach Anspruch 1,
**dadurch gekennzeichnet,**
**daß** das Software-Modell (S/W-Mod) der Steuerungssoftware erste Schnittstellen (I) in Richtung Steuerungssoftware (V-StrgS/W) nachbildet, welche den Schnittstellen (I₁, I₂, I₃, I₄) der ersetzten klassischen Hardware (K, KU, TG/AG, D) entsprechen.

3. Verfahren nach einem der Ansprüche 1 oder 2,
**dadurch gekennzeichnet,**
**daß** das Software-Modell (S/W-Mod) dergestalt konfigurierbar ist, daß zur Kommunikation mit den Komponenten (KS, AS, MG) des Netzwerkes der nächsten Generation (NGN) und zur Steuerung der Nutzkanäle (N) notwendige Adressierungsinformation abgeleitet werden.

4. Verfahren nach einem der Ansprüche 1 bis 3,
**dadurch gekennzeichnet,**
**daß** auf die klassische Hardware bezogene Adressen der
Nutzkanäle (N) über eine Tabelle in auf die Komponenten des Netzwerkes der nächsten Generation (NGN) bezogene Adressen der Nutzkanäle umgesetzt werden.

5. Verfahren nach einem der Ansprüche 1 bis 4,
**dadurch gekennzeichnet,**
**daß** das Software-Modell (S/W-Mod) dergestalt konfigurierbar ist, daß unterschiedliche Steuerprotokolle (MGCtrl) zur Steuerung der Komponenten des Netzwerkes der nächsten Generation (NGN) ohne Rückwirkungen auf die Steuerungssoftware bedient werden.

6. Verfahren nach einem der Ansprüche 1 bis 5,
**dadurch gekennzeichnet,**
**daß** spezifische, zur Steuerung der Komponenten des Netzwerkes der nächsten Generation (NGN) notwendige Nutzkanalbeschreibungsdaten innerhalb des Softswitches und zwischen weiteren SoftSwitches durch die Einführung eines Signalling Gateway Agents (SG-A) mittels einer zweiten Schnittstelle (U) bezüglich der Steuerungssoftware rückwirkungsfrei (V-StrgS/W) ausgetauscht werden.

7. Verfahren nach einem der Ansprüche 1 bis 6,
**dadurch gekennzeichnet,**
**daß** klassische Signalisierungsprotokolle mittels Signalling Gateway Agents (SG-A) und der zweiten Schnittstelle (U) mittels des Software-Modells (S/W-Mod) einem für Netzwerke der nächsten Generation spezifischen Protokollstack zugeführt und in ein für Netzwerke der nächsten Generation spezifisches Signalisierungsprotokoll konvertiert werden.

8. Vermittlungsknoten (SoftSW) eines Kommunikationsnetzwerkes der nächsten Generation (NGN) zur Ansteuerung von Komponenten (KS, AS, MG) des Netzwerkes der nächsten Generation mittels eines Steuerungsprotokolls (MGCtrl), wobei die Komponenten des Netzwerkes der nächsten Generation klassische, auf den Nutzkanal (N) bezogene Hardware (K, KU, TG/AG, D) eines herkömmlichen öffentlichen Telefonnetzwerkes (PSTN/ISDN) ersetzen,
**dadurch gekennzeichnet,**
**daß** der Vermittlungsknoten (SoftSW) Mittel (S/W-Mod) zum Nachbilden der ersetzten klassischen, auf den Nutzkanal (N) bezogenen Hardware (K, KU, TG/AG, D) des herkömmlichen öffentlichen Telefonnetzwerkes (PSTN/ISDN) aufweist, die so ausgestaltet sind, daß die Komponenten (KS, AS, MG) des Netzwerkes der nächsten Generation NGN mit einer Steuerungssoftware (V-StrgS/W) eines klassischen Vermittlungsknotens (OV, TV) des herkömmlichen Telefonnetzwerkes ansteuerbar sind.

9. Vermittlungsknoten nach Anspruch 8,
der zusätzlich Mittel zum Nachbilden erster Schnittstellen (I) in Richtung Steuerungssoftware (V-StrgS/W) aufweist, wobei die Schnittstellen (I) den Schnittstellen (I₁, I₂, I₃, I₄) der ersetzten klassischen Hardware (K, KU, TG/AG, D) entsprechen.

10. Vermittlungsknoten nach einem der Ansprüche 8 öder 9,
der zusätzlich Mittel zum Ermitteln von Adressierungsinformation der Komponenten (KS, AS, MG) des Netzwerkes der nächsten Generation NGN und zum Ermitteln von Adressierungsinformation zur Steuerung der Nutzkanäle (N) aufweist.

11. Vermittlungsknoten nach einem der Ansprüche 8 bis 10,
der zusätzlich einen oder mehrere Signalling Gateway Agents (SG-A) zum bezüglich der Steuerungssoftware (V-StrgS/W) rückwirkungsfreien Austauschen der für die Steuerung der Komponenten des Netzwerkes der nächsten Generation notwendigen Nutzkanalbeschreibungsdaten innerhalb des Vermittlungsknotens und zwischen weiteren Vermittlungsknoten mittels einer zweiten Schnittstelle (U) aufweist.

12. Vermittlungsknoten nach einem der Ansprüche 8 bis 11, dessen Signalling Gateway Agent (SG-A) zusätzlich Konvertierungsmittel zum Konvertieren klassischer Signalisierungsprotokolle in ein für Netzwerke der nächsten Generation spezifisches Signalisierungsprotokoll aufweist.

## Claims

1. Method for control of telephony services in next generation communication networks (NGN), where the next generation communication networks feature at least one SoftSwitch (SoftSW), which uses a control protocol to control components (KS, AS, MG) of the next generation network (NGN) which replace hardware (K, KU, TG/AG, D) related to a user channel (N) of a conventional public telephone network (PSTN/ISDN),
**characterized in that**
The classic hardware (K, KU, TG/AG, D) of the conventional public telephone network (PSTN/ISDN) related to the user channel replaced in the next generation networks is emulated with the aid of a software model (S·/W-Mod), with the components (KS, AS, MG) of the next generation networks (NGN) including a control software (V-StrgS/W) of a switching node (OV, TV) used in a conventional telephone network being controlled by a SoftSwitch (SoftSW).

2. Method in accordance with Claim 1,
**characterized in that**
the software model (S/W-Mod) of the control software emulates first interfaces (I) in the direction of control software (V-StrgS/W) which correspond to the interfaces (I₁, I₂, I₃, I₄) of the replaced classic hardware (K, KU, TG/AG, D).

3. Method in accordance with one of the Claims 1 or 2,
**characterized in that**
the software model (S/W-Mod) can be configured such that the addressing information necessary for communication with the components (KS, AS, MG) of the next generation network (NGN) and for control of the user channel (N) is obtained.

4. Method in accordance with one of the Claims 1 to 3,
**characterized in that**
addresses related to the classic hardware of the user channels (N) are converted via a table into addresses of the user channels related to the components of the next generation network (NGN).

5. Method in accordance with one of the Claims 1 to 4,
**characterized in that**
the software model (S/W-Mod) can be configured such that different control protocols (MGCtrl) are operated for control of the components of the next generation network (NGN) without repercussions on the control software.

6. Method in accordance with one of the Claims 1 to 5,
**characterized in that**
specific user channel description data needed for control of the components of the next generation network (NGN) is exchanged within the SoftSwitches and between further SoftSwitches by introducing a Signalling Gateway Agent (SG-A) by means of a second interface (U) without repercussions as regards the control software (V-StrgS/W).

7. Method in accordance with one of the Claims 1 to 6,
**characterized in that**
classic signalling protocols are routed by means of Signalling Gateway Agents (SG-A) and the second interface (U) by means of the software model (S/W-Mod) to a protocol stack specific to next generation networks and converted into a signalling protocol specific to next generation networks.

8. Switching node (SoftSW) of a next generation communication network (NGN) for control of components (KS, AS, MG) of the next generation network by means of a control protocol (MGCtrl), with the components of the next generation network replacing classic hardware (K, KU, TG/AG, D) related to the user channel (N) of a conventional public telephone network (PSTN/ISDN),
**characterized in that**
the switching node (SoftSW) features means (S/W-Mod) for emulating the replaced classic hardware (K, KU, TG/AG, D) related to the user channel (N) of the conventional public telephone network (PSTN/ISDN) which are embodied such that the components (KS, AS, MG) of the next generation network NGN can be controlled with a control software (V-StrgS/W) of a classic switching node (OV, TV) of the conventional telephone network.

9. Switching node in accordance with Claim 8,
which additionally features means for emulating first interfaces (I) in the direction of control software (V-StrgS/W), with the interface (I) corresponding to the interfaces (I₁, I₂, I₃ I₄) of the replaced classic hardware (K, KU, TG/AG, D).

10. Switching node in accordance with one of the Claims 8 or 9, which additionally features means for determining the addressing information of the components (KS, AS, MG) of the next generation network NGN and for determining addressing information for control of the user channel (N).

11. Switching node in accordance with one of the Claims 8 to 10, which additionally features one or more Signalling Gateway Agents (SG-A) for exchange of the user channel description information necessary for control of the components of the next generation network within the switching node and between further switching nodes by means of a second interface (U) without repercussions as regards the control software (VStrgS/W).

12. Switching node in accordance with one of the claims 8 to 11 of which the Signalling Gateway Agent (SG-A) additionally features means for converting classic signalling protocols into a protocol specific to next generation networks.

## Revendications

1. Procédé de commande de services téléphoniques dans des réseaux de communication de la prochaine génération (NGN), les réseaux de communication de la prochaine génération comportant au moins un commutateur SoftSwitch (SoftSW) qui, au moyen d'un protocole de commande, commande des composantes (KS, AS, MG) du réseau de la prochaine génération (NGN), lesquelles remplacent un hardware (K, KU, TG/AG, D), se rapportant à un canal utile (N), d'un réseau téléphonique public traditionnel (PSTN/ISDN),
**caractérisé en ce que**
le hardware classique (K, KU, TG/AG, D) du réseau téléphonique public traditionnel (PSTN/ISDN), se rapportant au canal utile (N) et étant remplacé dans les réseaux de la prochaine génération (NGN), est reproduit à l'aide d'un modèle de logiciel (S/W-Mod), les composantes (KS, AS, MG) du réseau de la prochaine génération (NGN) étant commandées par le commutateur SoftSwitch (SoftSW) avec prise en compte d'un logiciel de commande (V-StrgS/W) d'un noeud de commutation (OV, TV), lequel logiciel est mis en oeuvre dans un réseau téléphonique traditionnel.

2. Procédé selon la revendication 1,
**caractérisé en ce que**
le modèle de logiciel (S/W-Mod) du logiciel de commande reproduit des premières interfaces (I) en direction du logiciel de commande (V-StrgS/W), lesquelles correspondent aux interfaces (I₁, I₂, I₃, I₄) du hardware classique remplacé (K, KU, TG/AG, D).

3. Procédé selon l'une des revendications 1 ou 2,
**caractérisé en ce que**
le modèle de logiciel (S/W-Mod) peut être configuré de manière telle que de l'information d'adressage nécessaire pour la communication avec les composantes (KS, AS, MG) du réseau de la prochaine génération (NGN) et pour la commande des canaux utiles (N) est dérivée.

4. Procédé selon l'une des revendications 1 à 3,
**caractérisé en ce que**
des adresses des canaux utiles (N) se rapportant au hardware classique sont converties par l'intermédiaire d'une table en adresses des canaux utiles se rapportant aux composantes du réseau de la prochaine génération (NGN).

5. Procédé selon l'une des revendications 1 à 4,
**caractérisé en ce que**
le modèle de logiciel (S/W-Mod) peut être configuré de manière telle que des protocoles de commande (MGCtrl) différents pour la commande des composantes du réseau de la prochaine génération (NGN) sont pilotés sans rétroactions sur le logiciel de commande.

6. Procédé selon l'une des revendications 1 à 5,
**caractérisé en ce que**
des données de description de canal utile spécifiques, nécessaires pour la commande des composantes du réseau de la prochaine génération (NGN), sont échangées à l'intérieur du commutateur SoftSwitch et entre d'autres commutateurs SoftSwitches par l'introduction d'un Signalling Gateway Agent (SG-A) au moyen d'une deuxième interface (U) sans rétroaction pour ce qui est du logiciel de commande (V-StrgS/W).

7. Procédé selon l'une des revendications 1 à 6,
**caractérisé en ce que**
des protocoles de signalisation classiques sont amenés au moyen d'un Signalling Gateway Agent (SG-A) et de la deuxième interface (U) au moyen du modèle de logiciel (S/W-Mod) à une pile de protocole spécifique pour des réseaux de la prochaine génération et sont convertis en un protocole de signalisation spécifique pour des réseaux de la prochaine génération.

8. Noeud de commutation (SoftSW) d'un réseau de communication de la prochaine génération (NGN) pour commander des composantes (KS, AS, MG) du réseau de la prochaine génération au moyen d'un protocole de commande (MGCtrl), les composantes du réseau de la prochaine génération remplaçant un hardware classique (K, KU, TG/AG, D), se rapportant au canal utile (N), d'un réseau téléphonique public traditionnel (PSTN/ISDN),
**caractérisé en ce que**
le noeud de commutation (SoftSW) comporte des moyens (S/W-Mod) pour reproduire le hardware classique remplacé (K, KU, TG/AG, D), se rapportant au canal utile (N), du réseau téléphonique public traditionnel (PSTN/ISDN), lesquels moyens sont configurés de manière telle que les composantes (KS, AS, MG) du réseau de la prochaine génération (NGN) peuvent être commandés avec un logiciel de commande (V-StrgS/W) d'un noeud de commutation classique (OV, TV) du réseau téléphonique traditionnel.

9. Noeud de commutation selon la revendication 8,
lequel comporte additionnellement des moyens pour reproduire des premières interfaces (I) en direction du logiciel de commande (V-StrgS/W), les interfaces (I) correspondant aux interfaces (I₁, I₂, I₃, I₄) du hardware classique remplacé (K, KU, TG/AG, D).

10. Noeud de commutation selon l'une des revendications 8 ou 9,
lequel comporte additionnellement des moyens pour déterminer de l'information d'adressage des composantes (KS, AS, MG) du réseau de la prochaine génération (NGN) et pour déterminer de l'information d'adressage pour le commande des canaux utiles (N).

11. Noeud de commutation selon l'une des revendications 8 à 10,
lequel comporte, additionnellement, un ou plusieurs Signalling Gateway Agents (SG-A) pour échanger, sans rétroaction pour ce qui est du logiciel de commande (V-StrgS/W), les données de description de canal utile nécessaires pour la commande des composantes du réseau de la prochaine génération à l'intérieur du noeud de commutation et entre d'autres noeuds de commutation au moyen d'une deuxième interface (U).

12. Noeud de commutation selon l'une des revendications 8 à 11,
dont le Signalling Gateway Agent (SG-A) comporte additionnellement des moyens de conversion pour convertir des protocoles de signalisation classiques en un protocole de signalisation spécifique pour des réseaux de la prochaine génération.
